# EUROPEAN PATENT APPLICATION

(11) **EP 3 217 593 A1**
(43) Date of publication of application: **13.09.2017**
(21) Application number: 14902280.8
(22) Date of filing: 06.11.2014
(51) Int. Cl.: H04L 9/32, G06Q 20/30, G06Q 20/32, H04W 12/06, H04W 12/08, H04K 1/00

(54) **TWO-FACTOR AUTHENTICATION METHOD FOR INCREASING THE SECURITY OF TRANSACTIONS BETWEEN A USER AND A TRANSACTION POINT OR SYSTEM**

(71) Applicant: Toc S.A., Santiago (CL)
(72) Inventor: NAVARRO, Luft, Ricardo, Santiago (CL)
(74) Representative: Elzaburu S.L.P.
(86) International application number: PCT/CL2014/000058
(87) International publication number: WO 2016/070295

(57) **Abstract**

The present invention describes a method and a two-factor authentication system to increase the safety of transactions effected between a user and a transaction system or point of an entity. Said method comprises the steps of
- providing a set of functions to an application in a mobile device;
- accessing the application of the mobile device by recognizing biometric information;
- encrypting the transaction data if the identification is positive;
- sending the encrypted data to an external server along with at least the information on date, time, number of attempts and single number of the device;
- recording in the external server the received information and generating a single code for each transaction, and said code is then sent to the application housed in the mobile device;
- sending the single code and the transaction data to the transaction point from the mobile device through the application;
- checking by the transaction point with the external server that generates the single code the validity of said code and at least other information such as the date and time of code generation, and the geographical location of the place where the identity verification was carried out; and
- effecting the transaction if the request made by the transaction point coincides with the information provided by the user.

## Description

### Field of application

The present invention relates to the field of telecommunications and information handling, particularly to the verification of identities in transactions of various kinds effected between a user and a transaction point.

### Background of the invention

One of the main concepts at the time of effecting transactions of any kind between a user and a transaction point is the safety of said transaction. There is a high risk that during the transaction process information is lost or a third party can take data from said transaction and make malicious use of said data.

In the state of the art there are several systems and/or models trying to solve this problem by implementing measures that allow effecting transaction more safely. The document WO2014015346 describes systems and methods using biometric data of an individual for identifying the same. These systems and methods are useful for, amongst many applications, more secure identification of high-risk individuals attempting to gain access to an entity related to transport, information, location, security organization, law enforcement organization, transaction, services, authorized status, and/or funds. The system comprises an identification card comprising individualized identification information including individualized biometric data of at least a first class and individualized biometric data of a second class, wherein the individualized biometric data of the first class and the individualized biometric data of the second class are ordered together to form an individualized identification cryptographic hash. The system further comprises a processor configured to connect to at least one interrogation database including a plurality of interrogation biometric data of the second class, wherein each of the plurality of interrogation biometric data of the second class has an interrogation database identifier; and to interrogate at least one interrogation database, wherein each of the plurality of interrogation biometric data of the second class is ordered together with individualized biometric data of the first class to form a plurality of cryptographic functions of interrogation data. The system can compare each of the plurality of cryptographic functions for identifying individualized interrogation database and report a match of the cryptographic function of the interrogation database to the identification cryptographic function already individualized.

On the other hand, the document WO2013086857 discloses a method and system for verifying financial transaction, wherein said method comprises: a mobile terminal that sends transaction request to a server and the server verifies the legality of the transaction request. After the legality of the transaction is verified, the server sends an authentication code to the mobile terminal. A financial terminal sends the authentication code inputted by the user to verify whether said authentication code is the same as the authentication code sent to the mobile terminal by the server, and if both are the same, the authentication code is considered to be correct. At the same time information of a bank card inserted by the user is verified to verify whether the bank card information is the same as the information of a bank card bound to a telephone card of the mobile terminal, and if both are the same, the identity of a person taking money is considered to be legal or corresponds to the reality, and is allowed to enter the next transaction operation.

The document US2012173434 describes a method for authenticating a financial transaction at a point of sale (POS), which includes storing an application program in a first secure element of a mobile phone. The application is configured to generate instruction codes to effect the financial transaction upon verification of a user's identity. The user's credentials are stored in a second secure element (SE) of the phone, which is operable to verify the user's identity from a biometric trait of the user input to the phone and to generate data authenticating the financial transaction in response to the verification of the user's identity. At the POS, the user invokes the application and then inputs a biometric trait to the phone. The second SE verifies the user's identity, and upon verification, generates data authenticating the transaction. The financial transaction data, including the instruction codes and the authenticating data, are then transmitted from the phone to the POS.

Other kind of systems is described by the document US2010235382. This document refers to an identification and authorization system that utilizes a national identification (ID) database and a number of application-specific databases. The national ID database contains single individual ID numbers linked to single biometric codes. The application-specific databases contain an applicable portion of the same single individual ID numbers that are contained in the national ID database. To complete a transaction, a credential or an ID card is scanned and a biometric scan of the individual is completed. The transaction information and the individual ID number are sent to the appropriate application-specific database.

Verification of identity is completed at the national ID database, which compares the biometric code of the biometric scan with the biometric code linked to the single individual ID number. A response from the application-specific database and a response from the national ID database are sent to the scanning location.

The Korean patent application KR20040082674 discloses a system and a method for double biometric certification. The system comprises a first storage that stores/manages a first biometric information of a customer and a second storage that stores/manages a second biometric information of the customer. The system further comprises biometric information extractors that extract the first and the second biometric information from the customer. A biometric certification part performs the biometric certification by matching the extracted biometric information extracted from the biometric certification extractor with the biometric information stored in the first and the second storage.

The above-described documents relates to systems for verifying identity of both the user as the point of sale (POS) by codes, for example. However, this kind of systems is vulnerable, since the verification is performed by a single interaction route.

### Technical problem

The main technical problem of the above-indicated systems is the vulnerability mainly related to verification processes, which are carried out by a single route, for example, between a transaction point and a database or between the user and external databases. This kind of interaction involves safety problems, since there is no double verification of the information, in case this latter is maliciously utilized by a third party that can access to this single communication path.

### Technical solution

In order to increase the safety in transitions systems between a user and a transaction point a particular method and system is suggested, which allows verifying the identity of a user that is effecting a transaction from a set of functions incorporated in an application of a mobile device. The model includes the use by the user of the application installed on a mobile device with the respective functions, along with a system that records and generates a single code for each identity verification.

To effect a transaction the user accesses the application and by biometric detection, the user's identity is verified; if it is positive, it is encrypted and sent to an external server with the necessary information, which is recorded and a code is generated for each transaction in the server. This code is received by the application housed in the mobile device to be sent along with the transaction data to the transaction point. The transaction point checks the validity of this code with the server that generated the code, responding with the required information. Thus, this single code is verified by a third source.

### Brief description of the drawings

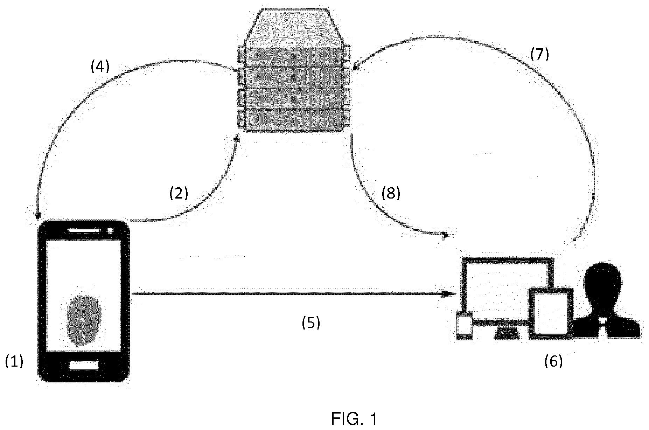

Figure 1 consists in a diagram of the two-factor authentication method according to a preferred embodiment of the invention.

### Detailed description of the invention

The present invention corresponds to a two-factor authentication method to increase the safety in transactions effected between a user and a transaction point. The main element of this method is the verification of two factors to increase the reliability of the transaction. The method allows collecting information of third parties on-line in order to verify the identity of a user that is effecting a transaction by means of the verification carried out by the same user as well as the verification carried out by the transaction point with a third source that does not depend on the transaction.

According to a preferred embodiment of the invention the system comprises at least one mobile device (1) having an application installed therein to effect the transaction. The method comprises the provision of a set of functions to incorporate in the application of the smart mobile device, which allows the reading of user's biometric information. These functions allow activating a biometric reader of the mobile device, waiting a while to activate the GPS of said device, reading the single serial number of the device and receiving an externally generated code.

At the time of effecting the transaction the user accesses the application of the mobile device by entering the corresponding biometric information, which verifies the identity. If the identity verification is positive, it is encrypted and this information is sent (2) to an external server (3) where said information comprises at least date, time, number of attempts and the single number of the device. The information is recorded in the external server (3) which contains the user's information, thus generating a single transaction code for each transaction sent to the user (4).

Subsequently, the application housed in the mobile device (1) receives the single code from the external server (3) and said code is sent (5) along with the data required for effecting the transaction with a transaction point or system (6).

As soon as the data is received from the user's application, the transaction point or system (6) verifies the validity of the single code with the external server (7) that generates said code. The external code replies to this request by validating said single code, the date and time of code generation, and the geographical location of the place where the identity verification was carried out (geographical coordinates, longitude and latitude) sending this validation (8) to the transaction point or system.

As soon as the single code is verified by the external server, the transaction between the user and the transaction point or system is effected.

This kind of solution allows authenticating two factors of the transaction information by the user with the external server and the transaction point with the same server in order to check the information by both routes, thus eliminating the risk of malicious use.

In a preferred embodiment of the invention, the mobile device, in which the verification and transaction application is installed, is comprised in the group of smartphones and tablet devices.

The verification of biometric information can include the verification through fingerprints, retina, iris, facial patterns, hand veins, geometry of the palm of the hand or other physical characteristics to verify the identity of the user by the mobile device.

## Claims

1. Two-factor authentication method to increase the safety of transactions between a user and a transaction point or system of an entity, comprising the steps of:
- providing a set of functions to an application in a mobile device;
- accessing the application of the mobile device by recognizing biometric information, where said functions allow activating a biometric reader of the mobile device, waiting a while to activate the GPS of said device, reading the single serial number of the device and receiving a generated code;
- encrypting the verification data on user's identity (date and time, single serial number and GPS position) if the identification is positive;
- sending the encrypted data to an external server along with at least the information on date, time, number of attempts and single number of the device;
- recording in the external server the received information and generating a single code for each transaction, and said code is then sent to the application housed in the mobile device;
- sending the single code and the transaction data to the transaction point from the mobile device through the application;
- checking by the transaction point with the external server that generates the single code the validity of said code and at least other information such as the date and time of code generation, and the geographical location of the place where the identity verification was carried out; and
- effecting the transaction if the request made by the transaction point coincides with the information provided by the user.

2. Two-factor authentication method according to the preceding claims, wherein the entity provides a reply to the application, said reply having the information requested by the verified person.

3. Two-factor authentication method according to claim 1, wherein the biometric verification can be carried out through fingerprints, retina, iris, facial patterns, hand veins, geometry of the palm of the hand or other physical characteristics.

4. Two-factor authentication system for increasing the safety of transactions between a user and a transaction point of an entity, wherein the user's mobile device having an application comprises a system for verifying the identity through biometric information, an external server comprising user's information to generate a single transaction code, and a transaction point checking the single code received by the user with the external server to verify the user's identity.

5. Two-factor authentication system according to claim 4, wherein the mobile device includes smartphones and tablet devices.

6. Two-factor authentication system according to claim 5, wherein the biometric verification system comprises at least one of the following verification: fingerprints, retina, iris, facial patterns, hand veins, geometry of the palm of the hand or other physical characteristics.
